Europäisches Patentamt

(19) European Patent Office

Office européen des brevets

(11) Numéro de publication: **0 051 517**
**B1**

(12) **FASCICULE DE BREVET EUROPEEN**

(45) Date de publication du fascicule du brevet: **12.12.84**

(21) Numéro de dépôt: **81401646.5**

(22) Date de dépôt: **20.10.81**

(51) Int. Cl.³: **F 16 K 31/40**

(54) **Electrovanne.**

(30) Priorité: **04.11.80 FR 8023521**

(43) Date de publication de la demande:
**12.05.82 Bulletin 82/19**

(45) Mention de la délivrance du brevet:
**12.12.84 Bulletin 84/50**

(84) Etats contractants désignés:
**AT BE CH DE FR GB IT LI LU NL SE**

(56) Documents cités:
**FR-A-1 110 895**
**FR-E- 72 694**
**US-A-3 368 582**

(73) Titulaire: **SOCIETE ELECTRO MECANIQUE DU
NIVERNAIS SELNI
173, boulevard Haussmann
F-75008 Paris (FR)**

(72) Inventeur: **Malbec, Yves
THOMSON-CSF SCPI 173, bld Haussmann
F-7360 Paris Cedex 08 (FR)**

(74) Mandataire: **Grynwald, Albert et al
THOMSON-CSF SCPI 173, Bld Haussmann
F-75379 Paris Cedex 08 (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

## Description

La présente invention a pour objet une électrovanne à membrane à commande indirecte par le fluide provenant de la canalisation d'entrée qui peut être avantageusement monté sur une machine à laver le linge ou une machine à laver la vaisselle, cette électrovanne présentant une faible consommation électrique.

Les électrovannes destinés à alimenter en eau les machines à laver sont généralement des électrovannes à une ou plusieurs voies, normalement fermés, et dont l'ouverture est commandée par un électroaimant dont les bobines sont reliées à une source de tension électrique par l'intermédiaire d'un programmateur électro-mécanique.

Dans certains types de machines à laver, ce programmateur électro-mécanique est remplacé par un programmateur électronique fonctionnant en basse tension continue, ce qui nécessite, pour la commande des bobines de l'électrovanne l'utilisation d'interfaces (relais statique ou mécanique).

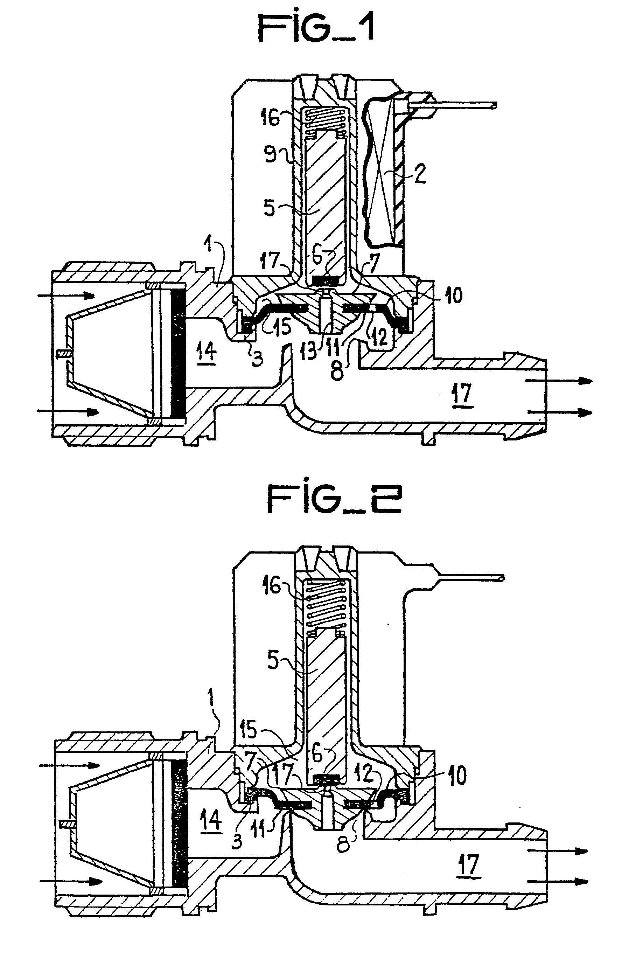

On connaît déjà une électrovanne dans le commerce qui correspond au préambule de la revendication 1. Cette électrovanne est représentée dans les figures 1 et 2, respectivement en position ouverte et en position formée.

D'autres électrovannes à commande indirecte par le fluide provenant de la canalisation d'entrée (voir p. ex. FR—A—1.110.895) comprennent une chambre d'entrée du fluide, une chambre de sortie du fluide, un orifice principal mettant en communication, sous le contrôle d'une soupape principale, les chambres d'entrée et de sortie, un piston différentiel solidaire de la soupape, une chambre intermédiaire dans laquelle se déplace le piston différentiel, un orifice de fuite mettant en communication la chambre d'entrée avec la chambre intermédiaire, une canalisation de fuite passant au travers de l'ensemble soupape principale-piston différentiel et mettant en communication, sous le contrôle d'une soupape pilote, la chambre intermédiaire avec la chambre de sortie.

Dans ce type d'électrovanne, la canalisation de fuite passe généralement à travers de l'ensemble soupape principale-piston différentiel est formée d'un trou axial pratiqué dans cet ensemble et la soupape pilote prévue pour obturer ce trou suit les déplacements de la soupape principale. Il en résulte que la course de la soupape pilote se trouve très importante et nécessite un électro-aimant volumineux fournissant une énergie importante pour commande le mouvement de la soupape pilote.

Dans cette électrovanne connue du FR—A—1 110 895, il est prévu, pour diminuer l'énergie nécessaire à la commande du mouvement de la soupape pilote, des éléments permettant un déplacement de la soupape pilote indépendamment de la course de la soupape principale. Dans cette réalisation, l'ensemble soupape principale-piston différentiel coulisse le long d'un tube central fixé sur le corps de l'électrovanne, la partie supérieure de ce tube servant de siège à la soupape pilote et la partie inférieure, fixée sur le corps de la vanne, étant munie de trous permettant une communication avec la chambre de sortie.

Dans cette électrovanne, l'étanchéité entre le tube central et l'ensemble soupape principale-piston différentiel est assurée par un joint annulaire en matière plastique, de section circulaire engagé dans une rainure de cet ensemble. L'étanchéité entre le piston différentiel et la chambre intermédiaire est également assurée par un joint annulaire en matière plastique élastique, engagé dans une rainure prévue sur le piston différentiel.

Cependant, une telle réalisation présente des inconvénients. En particulier, ces joints d'étanchéité doivent coulisser sur des surfaces en excellent état, ne présentant ni tracs d'usinage, ni plant de joint ou bavures (dans le cas de pièces moulées) ce qui accroit le coût de fabrication. De plus, l'ensemble l'ensemble de mobile doit être bien guidé par rapport aux éléments fixes (tube central et parois intérieures du corps de l'électrovanne) afin d'éviter tout coincement. Il est à noter que ce guidage doit présenter de faibles jeux afin d'assurer une bonne étanchéité. Enfin, les joints d'étanchéité s'opposent au mouvement de l'ensemble mobile soupape principale-piston différentiel, puisqu'ils exercent un frottement sur les parois.

L'électrovanne de type connu dans le commence, montrée en figures 1 et 2, est une électrovanne à ouverture pilotée et à une sortie. Cette électrovanne comporte un corps 1 surmonté d'un capuchon 9 tous deux en matériau non-magnétique. Autour de ce capuchon 9 est disposé une bobine 2 d'un électro-aimant muni d'une armature non représentée. Dans le capuchon 9 est disposé un noyau 5 mobile en matériau magnétique, ce noyau 5 étant muni à l'une de ses extrémités, d'un joint 6 d'étanchéité (en caoutchouc par exemple). Un clapet 7 mobile, destiné à venir en appui sur un siège 8 de clapet, est rendu solidaire du corps 1 de l'électrovanne au moyen d'une membrane 10 souple munie d'un orifice dit orifice pilote 12 de clapet. Cette membrane 10 constitue un joint d'étanchéité lorsqu'elle est appliquée sur le siège 8 de clapet (l'électrovanne est alors en position fermée comme montré en figure 2). Ce clapet est muni par ailleurs d'un canal central dit canal 13 de fuite ouvert à ses deux extrémités. L'électrovanne de type connu comprend encore une chambre 14 dite chambre amont en communication avec le réseau d'alimentation en eau, une chambre 15 pilote pouvant être mise en communication avec la chambre 14 au moyen de l'orifice pilote 12, et une tubulure 17 d'évacuation.

Lorsque cette électrovanne, de type connu, est au repos, la bobine 2 étant hors tension, le joint 6 du noyau mobile 5 vient, sous l'effet du poids du noyau 5 ou sous l'action d'un ressort 16, s'appliquer sur l'orifice amont de la tubulure 17 d'évacuation et l'obture (figure 2). L'électrovanne est fermée. Quand la bobine est mise sous tension, le noyau mobile 5, attiré par l'électro-aimant, dégage l'orifice amont de la tubulure 17 et le fluide peut alors s'écouler au travers de l'électrovanne (figure 1).

Cependant, cette électrovanne de type connu, nécessite une course du noyau mobile 5 suffisamment importante pour que, d'une part, l'orifice de fuite 17 soit dégagé et que, d'autre part, ce noyau mobile 5 soit suffisamment éloigné de l'orifice amont de la tubulure 17 pour que le clapet 7 ne vienne pas, au moment de l'ouverture de l'électrovanne, s'appliquer de nouveau sur ce noyau mobile 5.

L'électrovanne suivant l'invention, telle qu'elle est caractérisée dans la revendication 1, ne présente pas ces inconvénients. Elle est de faible consommation électrique et fonctionne avec un faible déplacement du noyau mobile. Des modes particuliers de réalisation de l'invention apparaissent dans les revendications dépendantes.

L'invention sera mieux comprise et d'autres caractéristiques apparaîtront à l'aide de la description ci-après et des dessins qui l'accompagnent et sur lesquels:

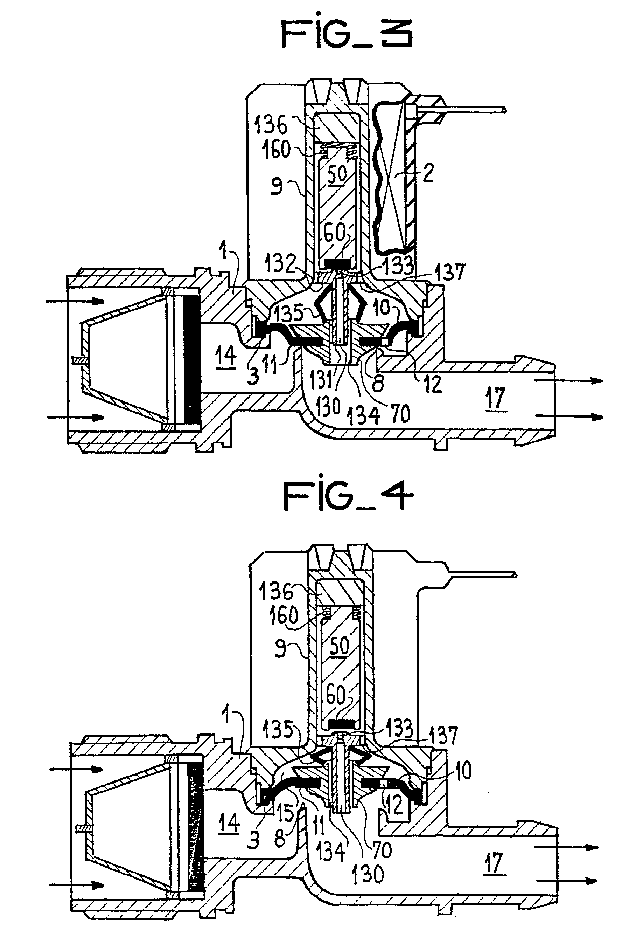

— les figures 3 et 4 représentent une électrovanne suivant l'invention, respectivement en position fermée et en position ouverte.

Dans la description qui va suivre, les éléments communs à l'électrovanne suivant l'invention et à l'électrovanne de type connue seront repérés avec les mêmes références.

L'électrovanne suivant l'invention comporte, comme le montre les figures 3 et 4, un corps 1 d'électrovanne surmonté d'un capuchon 9 autour duquel est placée une bobine 2 d'un électro-aimant muni d'une armature (non représenté), cette bobine 2 assurant le déplacement d'un noyau mobile 50 en matériau ferro-magnétique, ce noyau mobile 50 disposé dans le capuchon 9, étant dans l'exemple représenté en figures 3 et 4, muni à l'une de ses extrémités d'un joint 60 d'étanchéité. En vis-à-vis du noyau mobile 50 est disposé un canal de fuite 130 qui est fixe par rapport à l'électrovanne.

Ce canal de fuite 130 comprend une tubulure cylindrique 131 surmontée d'un plateau circulaire 132 coaxial à la tubulure 131, muni en son centre d'un orifice de fuite 133 calibré, et muni à sa périphérie d'orifices de passage 137 permettant la circulation du fluide.

L'électrovanne suivant l'invention comporte, de plus, un clapet 70 mobile qui est rendu solidaire du corps 1 de l'électrovanne au moyen d'une membrane 10 souple annulaire, dont le bord 11 intérieur, plan, vient s'insérer latéralement dans ce clapet 70, le bord extérieur étant fixé sur le corps 1. La membrane 10 constitue un joint d'étanchéité entre le clapet 70 et un siège 8 de clapet lorsque le bord 11 est appliqué sur le siège 8 de clapet (l'électrovanne est alors en position fermée comme le montre la figure 3). Le bord 11 plan de la membrane 10 est munie d'un orifice 12 dit orifice pilote du clapet.

Dans l'électrovanne suivant l'invention, le clapet 70 est muni d'un canal axial 134 destiné au passage de la tubulure de fuite 131, ce clapet 70 pouvant se déplacer librement le long de cette tubulure 131 qui est fixe. Le pilotage de cette électrovanne est donc indépendant du clapet 70.

L'électrovanne suivant l'invention comprend encore une chambre amont en communication avec le réseau d'alimentation en eau, une chambre 15 pilote pouvant être mise en communication avec la chambre 14 au moyen de l'orifice pilote 12, et une tubulure d'évacuation 17.

L'électrovanne suivant l'invention comporte, de plus un noyau fixe 136 solidaire de l'électro-aimant et qui permet de diminuer l'entrefer de cet électro-aimant et du noyau mobile 50 et donc de diminuer l'énergie nécessaire au pilotage de l'électrovanne. En effet, dans ce cas, le noyau mobile 50 étant à courte distance du noyau fixe 136, l'énergie nécessaire à l'appel du noyau mobile 50 et l'énergie nécessaire au maintien de ce noyau mobile 50 sont très réduites par rapport aux énergies habituellement utilisées pour le fonctionnement des électrovannes pilotées de type connu.

Un ressort 160 peut être disposé entre le noyau mobile 50 et le noyau fixe 136, ce ressort 160 étant destiné à pousser le noyau mobile 50 contre l'orifice de fuite 133 lorsque la tension appliquée sur la bobine 2 de l'électro-aimant est supprimée.

Afin d'assurer l'étanchéité entre la chambre pilote 15 et la tubulure 17 d'évacuation, un manchon 135, en forme de soufflet, est placé autour de la tubulure de fuite 131, une des extrémités du manchon 135 étant fixée sur le clapet 70 et l'autre extrémité étant fixée à la jonction du plateau circulaire 132 et de la tubulure de fuite 131.

Ce manchon 135 est de forme telle et en matériau (caoutchouc ou matière plastique par exemple) tel qu'il reste étanche quelle que soit la pression qui lui est appliquée et résiste en particulier aux forces d'écrasement dues à la différence de pression entre la chambre pilote 15 et la tubulure 17 d'évacuation. Il permet l'ouverture du clapet 70 aux très basses pressions et forme ressort, ce qui permet d'assurer une bonne fermeture du clapet 70 sur le siège 8 de ce clapet.

En fonctionnement, lorsque l'électrovanne suivant l'invention est au repos, la bobine 2 étant hors tension, le joint 60 du noyau mobile 50 vient s'appliquer sur l'orifice de fuite 133 et l'obture. La chambre pilote 15 est alors à la pression de la chambre amont 14 (pression du réseau d'alimentation) grâce à l'orifice pilote 12, ce qui maintient la partie 11 de la membrane 10 du clapet 70 plaquée sur le siège 8 de clapet. L'électrovanne est fermée.

Lorsque la bobine 2 est mise sous tension, le noyau mobile 50 est attiré par le noyau fixe 136 associé à l'électro-aimant et dégage alors l'orifice 133 de la tubulure de fuite 130. Le fluide de la chambre pilote 15 peut alors s'écouler dans la tubulure 17 d'évacuation. En effet, l'orifice de fuite 133 est calibré de telle sorte que sa perte de charge soit inférieure à celle de l'orifice pilote 12, ce qui met la chambre pilote 15 en dépression par rapport à la chambre amont 14. La résultante des forces appliquées sur le clapet 70 est alors telle que ce clapet 70 s'éloigne du siège 8 de clapet. L'électrovanne est ouverte et le reste tant que la bobine 2 est alimentée en tension. Cette tension peut être inférieure aux tensions habituellement utilisées, car l'effort nécessaire au maintien du noyau mobile 50 sensiblement contre le noyau fixe 136 est très faible. L'énergie consommée est alors très réduite.

Lorsque la bobine 2 cesse d'être alimentée en tension, le noyau mobile 50, par son propre poids, ou plus habituellement grâce à un ressort 160, vient de nouveau s'appliquer sur l'orifice de fuite 133. La pression remonte dans la chambre pilote 15 et la résultante des forces appliquées sur le clapet 70 a pour effet de ramener ce clapet 70 sur le siège 8 de clapet.

A titre d'exemple, une électrovanne suivant l'invention, telle que décrite dans ce qui précède, nécessite pour son fonctionnement une puissance à l'appel de 600 milliwatts environ seulement, alors que la puissance de décrochage n'est que de quelques milliwatts.

Ceci permet donc l'adaptation aisée de cette électrovanne à une commande électronique, les caractéristiques de cette électrovanne suivant l'invention étant au moins aussi satisfaisantes que celles des électrovannes de type connu nécessitant une énergie électrique de fonctionnement bien supérieure.

Il est à noter que l'énergie nécessaire à l'élimination de l'électrovanne suivant l'invention peut encore être diminuée en choisissant un ressort 160 de grande élasticité. Il est même possible de supprimer ce ressort 160 en choisissant convenablement l'orientation de l'électrovanne, la fermeture de l'orifice de fuite 133 par le joint 60 du noyau 50 étant assurée par le poids de ce noyau 50. Dans ce cas, il peut être avantageux de disposer entre le noyau mobile 50 et le noyau fixe 136 une rondelle en matériau non magnétique.

Il est également possible, pour diminuer l'énergie appliquée sur la bobine 2 de l'électro-aimant, d'augmenter le diamètre du noyau mobile 50 et/ou d'augmenter le nombre de spires de la bobine 2.

## Revendications

1. Electrovanne à membrane et à commande indirecte par le fluide provenant de la canalisation d'entrée (14) comportant un corps (1), un capuchon (9) solidaire du corps (1), un électro-aimant muni d'une bobine (2) disposée autour du capuchon (9), un noyau mobile (50) placé dans ce capuchon (9) et pouvant obturer l'orifice de fuite (133) d'un canal de fuite (130) de la commande indirecte, un clapet (70) mobile rendu solidaire du corps (1) au moyen d'une membrane (10) souple, annulaire, dont le bord (11) intérieur, plan, vient s'insérer latéralement dans ce clapet (70), le bord (3) extérieur de la membrane (10) étant fixé sur le corps (1), cette membrane (10) étant munie d'un orifice (12) pilote assurant la communication entre la canalisation d'entrée (14) et une chambre (15) pilote de l'électrovanne, caractérisée en ce que le canal de fuite (130) est formé par une tubulure cylindrique (131) surmontée d'un plateau (132) circulaire, coaxial à la tubulure (131), muni axialement de l'orifice de fuite (133) et muni à sa périphérie d'au moins un orifice (137) pour le passage du fluide entre la chambre pilote (15) et l'intérieur du capuchon (9), ce plateau (132) circulaire, fixe, étant solidaire du capuchon (9) de l'électrovanne; en ce qu'un manchon (135) d'étanchéité, tubulaire, élastique, formant soufflet, est placé autour de la tubulure cylindrique (131) du canal de fuite, une extrémité de ce manchon (135) étant fixée à l'extrémité de la tubulure (131) se raccordant au plateau circulaire (132), et l'autre extrémité étant fixée sur le clapet (70) mobile, et en ce que ce clapet (70), qui est muni axialement d'un canal (134) destiné au passage de la tubulure (131), peut coulisser sous frottement le long de la tubulure (131).

2. Electrovanne selon la revendication 1, caractérisé en ce qu'il comporte un noyau fixe (136) associé à l'électro-aimant et disposé en vis-à-vis du noyau mobile (50), ce noyau fixe (136) placé à courte distance du noyau mobile (50) permettant à l'électrovanne de fonctionner avec des énergies électriques d'appel et de maintien du noyau mobile (50) inférieures aux énergies d'appel et de maintien utilisées dans les électrovannes pilotées, classiques.

3. Electrovanne selon la revendication 2, caractérisé en ce qu'un ressort (160) est placé entre le noyau fixe (136) et le noyau mobile (50).

4. Machine à laver, caractérisée en ce qu'elle comporte une électrovanne suivant l'une quelconque des revendications 1 à 3.

## Patentansprüche

1. Membran-Elektroventil mit indirekter Steuerung durch das fluide Medium aus der Eingangskanalisation (14), mit einem Körper (1), einer fest mit dem Körper (1) verbundenen Haube (9), einem Elektromagnet, der mit einer um diese Haube (9) herum angeordneten Spule (2) versehen ist, einem innerhalb dieser Haube (9) angeordneten beweglichen Kern (50), der die Lecköffnung (133) eines Leckkanals (130) der indirekten Steuerung verschließen kann, einer beweglichen Ventilklappe (70), die an den Körper (1) über eine flexible, ringförmige Membran (10) angeschlossen ist, deren ebener Innenrand (11) seitlich in diese Ventilklappe (70) eingesetzt ist, während der Außenrand (3) der Membran (10) an dem Körper (1) befestigt ist, wobei diese Membran (10) mit einer Pilotöffnung (12) versehen ist, welche die Verbindung zwischen der Eingangskanalisation (14) und einer Pilotkammer (15) des Elektroventils gewährleistet, dadurch gekennzeichnet, daß der Leckkanal (130) durch ein zylindrisches Röhrchen (131) gebildet ist, über dem sich eine Kreisfläche (132) befindet, welche koaxial zu dem Röhrchen (131) liegt und axial mit der Lecköffnung (133) versehen sowie an ihrem Umfang mit wenigstens einer Öffnung (137) für den Durchgang des fluiden Mediums zwischen der Pilotkammer (15) und dem Innenraum der Haube (9) versehen ist, wobei diese feststehende Kreisfläche (132) fest mit der Haube (9) des Elektroventils verbunden ist; daß eine rohrförmige, elastische und einen Balg bildende Dichtungshülse (135) um das zylindrische Röhrchen (131) des Leckkanals herum angeordnet ist, wobei ein Ende dieser Hülse (135) an dem Ende des Röhrchens (131) befestigt ist, welches an die Kreisfläche (132) anschließt, während das andere Ende an der beweglichen Ventilklappe (70) befestigt ist, und daß diese Ventilklappe (70), welche axial mit einem Kanal (134) für den Durchgang des Röhrchens (131) versehen ist, reibungslos entlang dem Röhrchen (131) gleiten kann.

2. Elektroventil nach Anspruch 1, dadurch gekennzeichnet, daß es einen dem Elektromagneten zugeordneten feststehenden Kern (136) umfaßt, der gegenüber dem beweglichen Kern (50) feststehend angeordnet ist und sich in geringem Abstand von dem beweglichen Kern (50) befindet, wodurch das Elektroventil mit elektrischen Ansprech- und Halteenergien für den beweglichen Kern (50) betrieben werden kann, die geringer sind als die von den herkömmlichen gesteuerten Elektroventilen benötigten Ansprechund Halteenergien.

3. Elektroventil nach Anspruch 2, dadurch gekennzeichnet, daß eine Feder (16) zwischen dem feststehenden Kern (136) und dem beweglichen Kern (50) angeordnet ist.

4. Waschmaschine, dadurch gekennzeichnet, daß sie ein Elektroventil nach einem der Ansprüche 1 bis 3 enthält.

**Claims**

1. Diaphragm electrovalve which is indirectly controlled by the fluid from the input piping (14) and comprising a body (1), a hood (9) affixed to the body (1), an electromagnet provided with a coil (2) disposed about the hood (9), a movable core (50) located within this hood (9) and adapted to shut off the leakage orifice (133) of a leakage channel (130) of the indirect control, a movable flap (70) joined to the body (1) through a flexible annular diaphragm (10) the inner plane edge (11) of which is laterally received in this flap (70), the outer edge (3) of the diaphragm (10) being secured on the body (1), this membrane (10) being provided with a pilot orifice (12) assuring the communication between the input piping (14) and a pilot chamber (15) of the electrovalve, characterized in that the leakage channel (130) is formed by a cylindrical tubule (131) whereabove a circular land (132) is located in coaxial relationship with the tubule (131), and which is axially provided with the leakage orifice (133) and has at least one orifice (137) for the passage of the fluid on its periphery between the pilot chamber (15) and the inside of the hood (9), this circular land (132) being stationary and affixed to the hood (9) of the electrovalve, in that a tubular resilient sealing sleeve (135) forming a bellows is placed about the cylindrical tubule (131) of the leakage channel, one end of this sleeve (135) being secured on the end of the tubule (131) joining the circular land (132), and the other end being affixed to the movable flap (70), and in that this flap (70) which is axially provided with a channel (134) for the passage of the tubule (131) is free to slide without friction along the tubule (131).

2. Electrovalve according to claim 1, characterized in that it comprises a stationary core (136) associated with the electromagnet and arranged in facing relationship to the movable core (50), this stationary core (136) placed at a short distance from the movable core (50) permitting the electrovalve to be operated by smaller electric response and holding energies of the movable core (50) than the response and holding energies required by the conventional controlled electrovalves.

3. Electrovalve according to claim 2, characterized in that a spring (160) is placed between the stationary core (136) and the movable core (50).

4. Washing machine, characterized in that it comprises an electrovalve according to any of claims 1 to 3.

FIG_1

FIG_2

0 051 517

1

# FIG_3

# FIG_4